# EUROPEAN PATENT SPECIFICATION

(11) **EP 0 752 141 B1**
(45) Date of publication and mention of the grant of the patent: **08.12.1999**
(21) Application number: 95912250.8
(22) Date of filing: 17.03.1995
(51) Int. Cl.: G06T 7/20, H04N 7/32

(54) **METHOD AND APPARATUS FOR ESTIMATING MOTION**
VERFAHREN UND GERÄT ZUR BEWEGUNGSBESTIMMUNG
PROCEDE ET DISPOSITIF DESTINES A L'ESTIMATION DU MOUVEMENT

(30) Priority: 25.03.1994 NO 941126
(43) Date of publication of application: 08.01.1997
(73) Proprietor: IDT INTERNATIONAL DIGITAL TECHNOLOGIES DEUTSCHLAND GmbH, D-85737 Ismaning (DE)
(72) Inventor: MARTENS, Harald, Aagaard, D-81927 München (DE); REBERG, Jan, Otto, D-81925 München (DE)
(74) Representative: Betten & Resch
(86) International application number: EP9501011
(87) International publication number: WO9526539

(56) References cited:
- EP-A- 0 362 849
- EP-A- 0 392 671
- EP-A- 0 498 938

## Description

### Field of the Invention

The present invention relates to a method and apparatus for estimating or analyzing movement of data patterns between similar frames. The invention can be used for estimating motion between video images, for recognizing voice, and for a number of other applications in connection with physical entities moving in time, space, frequency, intensity, color, shape, etc.

In image analysis and compression, this is often called motion estimation, motion vector selection, disparity analysis, or finding optic flow or velocity patterns. In signal processing it is called dynamic time warping.

### Background of the Invention

A general description of this field is given by Ajit Singh ("Optic Flow Computation", IEEE Computer Society Press, 1991).

EP-A-348207 describes an image motion vector detecting apparatus. US-A-5 276 513 describes an implementation architecture for performing hierarchical motion analysis of video images in real time.

EP-A-538667 describes an adaptive motion compensation using a plurality of motion compensators.

PCT/US94/10190 describes a method and apparatus for data analysis.

All references mentioned before are incorporated herein by reference.

There already exist methods according to the above references. But these methods have some problems:

### Too simplistic models

In video compression systems, like MPEG and MPEG II, one common assumption is that one frame usually can be reconstructed by dividing the frame into blocks, often consisting of 16*16 pixels, and then for each block locating and transmitting position of the most similar block in one or two already transmitted frames. This method is reasonably simple to implement, but it does not necessarily provide optimal compression ratios.

### Noise robustness

When the result is based on only one pair of data sets, then noise in the input data sets will result in noise in the output.

### Precision

When the result is based on only one pair of data sets, this limits the precision of the output. E.g., for matching digital images, it is impossible without any preassumptions to find the match between two pixels with better than one pixel accuracy in position.

### Ambiguity

When matching one feature in one frame against another frame, sometimes there are more than one possible match. This creates problems for many methods.

EP-A-0 498 938 discloses a method for improvement of quality of moving vectors for digital image transmission wherein a movement vector of one block is compared with the movement vector of an adjacent block and tested for plausibility. Similiar motion vectors are grouped into a class in dependence of the neighbouring and the similarity. These classified vectors are averaged and weighted. In case of great deviations the most weighted motion vector can substitute the present motion vector. This document does not disclose the use of external information. In contrast the plausibility criterion is an internal one.

Accordingly, it is an object of the present invention to provide a method and apparatus for estimating movement of data patterns between similar frames which solve the above mentioned problems.

It is also an object of the present invention to provide a method and apparatus for estimating movement of data patterns between similar frames which provide efficient and easy detection of the motion of moving data patterns.

### Summary of the Invention

This invention is mainly concerned with the processing of at least two frames, called "FromFrame" and "ToFrame", finding for each sample in the first frame (FromFrame) where the corresponding sample is located in the second frame (ToFrame), so that the "motion field" could efficiently be detected.

A first embodiment of the present invention provides a method and apparatus for estimating motion between at least two frames, each consisting of a plurality of samples of an input signal, the method comprising the steps of: (1) selecting for each sample in the first frame a plurality of candidate shifts, (2) computing for each candidate shift a measurement of fit between said sample in said first frame and the corresponding sample at the shifted position in said second frame, (3) selecting for each sample in said first frame the shift with the best associated fit, wherein the collection of selected shifts represents the motion from said first frame to said second frame, and, prior to step (3), (4) adjusting for each sample in said first frame the measurement of fit according to an externally available hypothesis indicating a priori knowledge about how probable it is that certain shifts represent the correct motion.

A further embodiment of the present invention provides a method and apparatus for estimating motion between at least two frames each consisting of a plurality of samples of an input signal, the method comprising the steps of: (1) selecting for each sample in the first frame a plurality of candidate shifts, (2) computing for each candidate shift a measurement of fit between said sample in said first frame and the corresponding sample at the shifted position in said second frame, (3) selecting for each sample in said first frame the shift with the best associated fit, wherein the collection of selected shifts represents the motion from said first frame to said second frame, and, prior to step (3),(4) adjusting for each sample in said first frame the measurement of fit for each shift according to measurements of fit for the same shifts for adjacent samples in said first frame.

The present invention provides an improvement of existing technology by exploiting more data and a priori knowledge in the analysis. It describes a method and apparatus for assembling together information from several sources, e.g.
- Preceeding or otherwise similar frames:
   Instead of using only two frames as basis for the estimation, this invention allows information from several frames to be exploited at the same time.
- Other sensors or methods:
   When collecting raw data, one often has the possibility of using several methods. E.g., when preparing terrain maps, one could combine aerial photographs with traditional triangulation or Global Positioning System (GPS). This invention makes it possible to combine several such different data sets into one common framework.
- Regularity/smoothness:
   One often has some knowledge of how smooth the solution should be. E.g., when preparing terrain maps, one usually knows if the area consists of mountains or fields. This invention gives a possibility of exploiting such knowledge.

### Brief Description of the Drawings

Fig. 1a gives an overview of the method according to prior art;
Fig. 1b gives an overview of the method according to the invention using a motion estimator according to the invention;
Fig. 2 gives a numeric example;
Fig. 3 shows a pyramidal framework;
Fig. 4 shows a pipelined architecture, suitable for the pyramidal framework in Fig. 3;
Fig. 5 shows in more detail the inner workings of Reward; and
Fig. 6 shows in more detail the computation of slacks shown in Fig. 2.

First of all, some terms used in this description will be explained.

### Definitions

One set of samples of an input signal from one domain, which could be a temporal, spatial, color or shape domain, will here be called a frame. For an example from sound applications, a frame could consist of air pressure measurements, when air pressure varying as a function of time is picked up with a microphone and recorded on some storage medium, during utterance of one word. It would be practical to address the samples using one number, corresponding in this example to time, and so this structure will be called a one-dimensional frame, or 1D frame for short.

For an example from imaging applications, a frame could consist of light intensity measurements. Such samples are usually called picture elements, or also just "pixels". Here it would be practical to address the samples using two numbers, namely one indicating which scan line a pixel belongs to (which will be called its vertical position) and one indicating its position along this scan line (which will be called its horizontal position), and so this structure will be called a two-dimensional frame, or 2D frame for short.

For an example from higher-dimensional imaging applications, a frame could consist of tomograhpy samples from a MRI, PET or similar 3-dimensional volume scanner. The samples correspond to some radiation attenuation or emission caused by the measured object. Each sample is addressed using a combination of up to three spatial coordinates and possibly also a temporal coordinate.

The term "motion" will be used when similar patterns have different "positions" in the frames. This will not necessarily be the same as motion in the traditional sense; e.g., for sound applications, this "motion" can be interpreted as shift in time or varying delay.

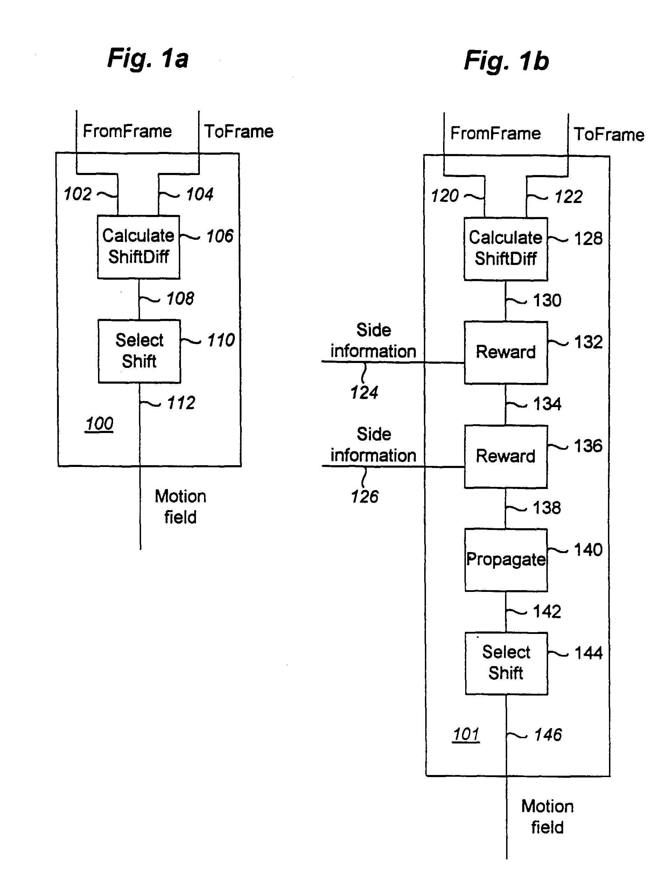

In order to more readily understand the invention a brief description of prior art is given with reference to Fig. 1a.

Prior art can be summarized with reference to Fig. 1a showing a motion estimator 100. A FromFrame 102 and a ToFrame 104 are input to a module 106 for calculating a Shift Difference 108 (to be defined below). A further module 110 selects for each element in the FromFrame a "best" shift, and together this collection of shifts constitutes a motion field 112.

Block based techniques, like used in MPEG image sequence compression standards, divide FromFrame 102 into blocks and for each block evaluate different shifts into ToFrame 104, and the module for selecting shift 110 usually selects shifts minimizing sum of absolute value of displaced frame difference.

Gradient based methods like these presented by B.K.P. Horn/B.Schunck ("Determining Optical Flow", Artificial Intelligence 17, 1981), which is incorporated herein by reference, first calculate ShiftDiff, together with gradients, according to some motion hypothesis, and then use this information for selecting a better motion hypothesis. This is iterated, producing better motion fields. A variation of this technique with fewer or no iterations is described in EP-A-596 409.

Phase correlation based methods perform an analysis in the frequency domain in order to select only the few most probable candidate shifts, before ShiftDiff is computed and the "best" shifts are selected. WO-A-87/05769 describes a TV picture motion measurement system based on this principle.

Feature based methods first extract features from the frames, then calculate ShiftDiff and select shifts for these features. The output motion for the features can then be interpolated or otherwise converted to apply for the whole frame if wanted.

### Detailed Description of the Preferred Embodiments

A general overview of the invention gives Fig. 1b showing a motion estimator 101, in short EstMov 101, according to the invention. According to prior art EstMov 101 consists of a module 128 for calculating the Shift Difference 130 of two input frames 120, 122 and a module 144 for selecting shifts, and also has the novel feature of beeing able to exploit side information 124 and 126 through one or more reward modules 132, 136 and the the novel feature of a module 140 for propagating information in the ShiftDifference.

The side information consists of hypotheses for a motion field, and optionally also strengths and ranges for theses hypotheses, which is further explained later.

The invention will be exemplified by three different preferred embodiments. The first will be for 1D frames, which is less difficult to explain.

### First Preferred Embodiment

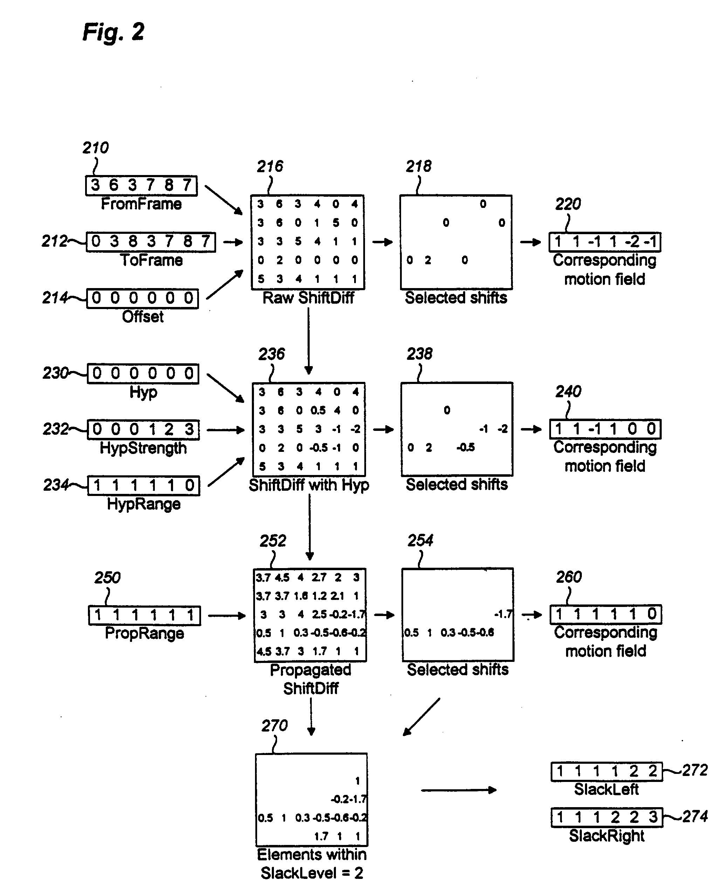

The method will be explained with reference to a numerical example given in Fig. 2. The motion is to be computed from a FromFrame 210, consisting of 6 elements, to a ToFrame 212, consisting of 7 elements. By visual inspection, it seems that the elements in From Frame have moved one step to the right. For this example, it is also given that based on previous results, e.g. from analysis of previous frames if this were two frames from a sequence, one has found that there is probably no motion in the rightmost part of the frame.

It should be understood that FromFrame or ToFrame could be measured and digitized values from some sensor, or synthesized values from some model. FromFrame or ToFrame can also have been preprocessed. One useful way of preprocessing is filtering. Low pass filtering can be utilized to disregard changes in the smallest details, which can often be modelled more efficiently with intensity modelling than with motion modelling. High pass filtering can be utilized to account for general intensity changes. This can also be done in one operation by band pass filtering. FromFrame or ToFrame may also have been subsampled.

The basic data structure to be operated on is a so-called "shift difference matrix", or for short ShiftDiff. For 1D frames, this matrix has 2 dimensions. One dimension corresponds to the number of elements in FromFrame, and the other dimension corresponds to the number of different positions in ToFrame an element of From Frame may be moved to.

Each such position selected to be represented in ShiftDiff and thereby considered in the further analysis is called a candidate shift. One way of selecting candidate shifts for an element in FromFrame is to select all shifts up to a specified limit, which may be called SearchRange, away from its position in From Frame.

Each element in ShiftDiff corresponds to the lack of fit when moving an element in FromFrame to the position in ToFrame. More formally, the method for calculating ShiftDiff can be defined as:

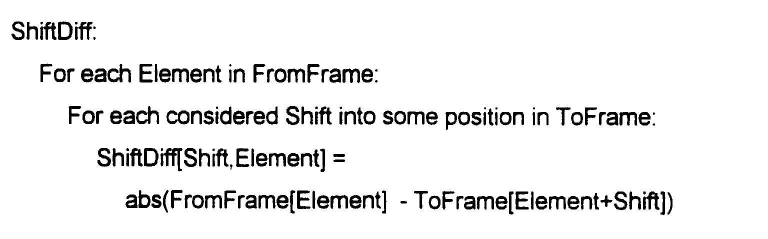

In this preferred embodiment, absolute value of difference is used as the measure of lack of fit. It should be understood that other measures could be used. One possibility is to use square of difference.

In this preferred embodiment, the computation is performed with regard to each of the elements of FromFrame and To Frame. It should be understood that the computation could be performed with regard to blocks of elements. For an example on how this invention can be applied with blocks, the method for calculating ShiftDiff is given for blocks:

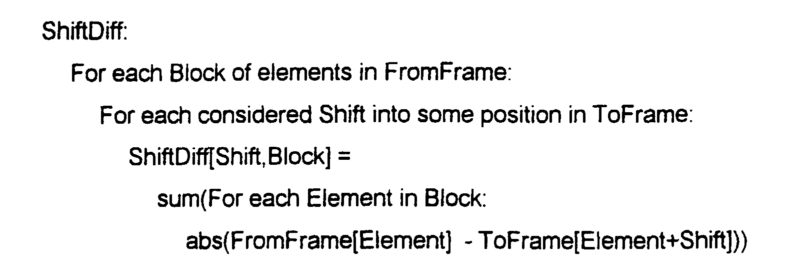

The computed motion field will then have the resolution given by the block size.

EP-A-294 961 uses ShiftDiff according to the above definition.

The candidate shifts are not restricted to one pixel position step as indicated above. In particular, they can be smaller than one pixel position step. In this case, interpolation in ToFrame is implied. E.g, if motion is to be computed to half pixel resolution, then the method for calculating ShiftDiff should be changed into:

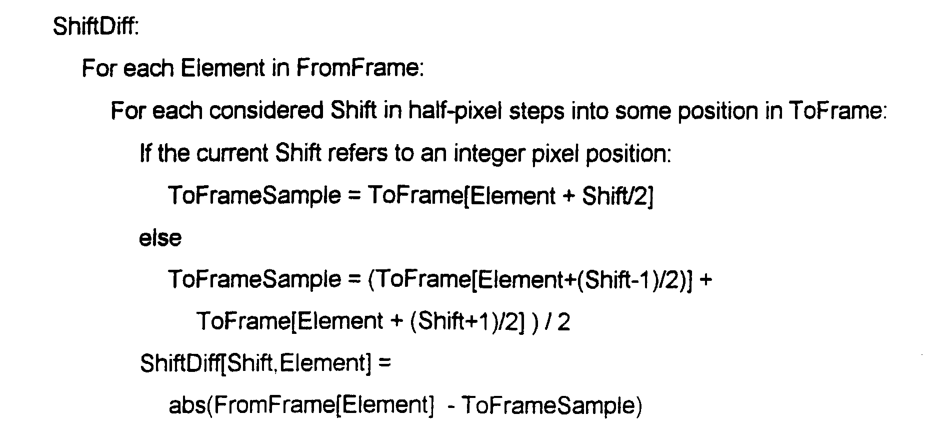

ShiftDiff can be based on more than two frames. E.g, when each frame corresponds to a point in time, motion with little acceleration is wanted, and several input frames are available, it is possible to use one frame as FromFrame, the following frame as ToFrame, but then also to use the frame previous to From Frame, in short called PrevFrame, as basis for computing ShiftDiff. It can then be assumed that if an element can correctly be described by selecting one shift representing motion from FromFrame to ToFrame, it should also be correctly described by the opposite shift from FromFrame to PrevFrame. The direction is opposite because the motion is assumed to be proportional to time and the time from From Frame to PrevFrame is the negative of the time from FromFrame to ToFrame.

Here is how to compute ShiftDiff based on From Frame, ToFrame and PrevFrame:

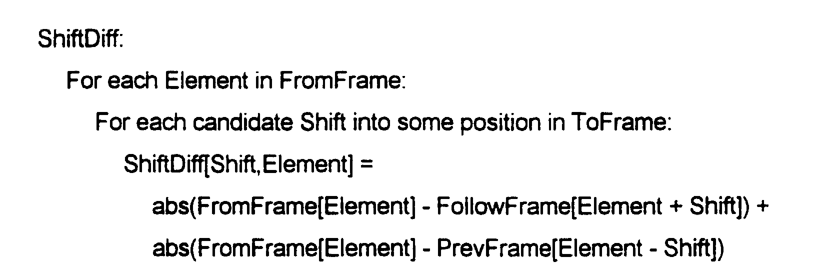

Often, one has reason to assume that a rough estimate of the motion is known, and only the correction to the estimate is wanted. If at the same time the search range is large, then the above method of calculating ShiftDiff becomes inefficient, in that large parts of ShiftDiff will correspond to shifts that are not of interest. It then becomes more efficient to only select a few candidate shifts at or adjacent to the given estimate and only work on these. At the same time, it will usually be preferrable to have a regular structure of ShiftDiff, in order to simplify processing. One compromise is to only have a fixed number of candidate shifts, calculated according to an offset Off. So, for each element in From Frame, one does not necessarily compare this to elements in the same or and adjacent position in ToFrame, but rather to elements at or adjacent to a given offset position in ToFrame.

In Fig. 2, an Offset 214 is zero for all elements, for reasons of simplicity in the example. ShiftDiff 216 is computed based on FromFrame 210, ToFrame 212 and Offset 214. This means that the centre row in ShiftDiff corresponds to no motion, while the two lowest rows correspond to motion one and two steps to right respectively and the two upper rows correspond to motion two and one steps to left respectively. The search range is thereby +/- 2 element positions.

Edges must be treated specially. In the given numerical example, this is taken care of by computing ShiftDiff according to the rule that when a combination of FromFrame element position, shift and Offset corresponds to a position in ToFrame outside of the given elements, then ToFrame is considered to be extended beyond is limits by repeating the outermost element.

Another solution to edges is to mark elements in ShiftDiff corresponding to combinations of element positions, shifts and offsets outside of ToFrame as undefined, and skip these values in all subsequent processing.

There may also be other reasons than edges that certain elements of ShiftDiff should be kept out of subsequent processing. One such reason could be that an estimate of motion only for a selected part of FromFrame is wanted. By marking the elements in ShiftDiff not corresponding to this selection as undefined and thereby skipping these in subsequent processing, unwanted information from other parts of FromFrame will not be propagated into the selected part. This can also give processing speed or memory consumption advantages.

Another reason for keeping certain elements of ShiftDiff out of subsequent processing is that information on occlusions may be known. An occlusion is defined as two parts of FromFrame moving so that in ToFrame, the first part will cover the second part. Assume that motion, and thereby also its position in ToFrame, is known for such a first part. When motion for the second part is to be analyzed, the shifts that would result in elements of the second part to be moved to positions that are already occupied by elements for the first part will not contribute well to the solution.

One way of achieving this is to let each element in ToFrame have with it an associated value indicating if this element is considered to be a part of an already known, occluding part. Combinations of element positions, shifts and possibly offsets leading to elements of FromFrame ending up in the occluded part of ToFrame should then be handled by marking the corresponding element in ShiftDiff as undefined.

For further details reference is made to the article "Motion Estimation with Detection of Occlusion Areas" by Denommier/Dubois (IEEE, 0-7803-953209/92) which is incorporated herein by reference.

With prior art, one way of proceeding estimating movement would be to select the lowest value from each column in ShiftDiff 216. If the lowest value is duplicated in some column, there must be one or more guidelines for selecting which to use; one possible guideline is to select the first found, assuming that ShiftDiff is searched from top and downwards. According to these rules, shifts 218 can be selected, and the positions of the selected shifts then directly correspond to a motion field 220.

The motion field 220 in the numerical example indicates some of the problems according to this simplistic method: In some areas of the image, there will be ambiguities, since there will be several possible motions that will result in the same measurement of fit. E.g, the element with value 8 in FromFrame 210 has been matched with the first occurence of an element with value 8 in ToFrame, though it seems based on it neighbours that it should rather have been matched with the second occurence of the value 8 in ToFrame 212. The motion field is not smooth, as would have been expected for many types of sensors, e.g. TV cameras recording data from the interior of rigid convex objects.

The known methods of analyzing have not utilized any possible side information available from other sources. There has been no attempt to estimate motion in such a way that it will fit to a model. The present invention attempts to solve these problems, as will be shown in the following.

There may be side information available. Where this side information comes from is known to the expert, but possible sources could be previous analysis in lower resolution, or a prediction based on previous frames.

Each such set of side information is called a "hypothesis", in short Hyp. Each Hyp specifies one particular motion field. As mentioned early in the description of this first preferred embodiment, this example has a hypothesis of no motion in the right part of FromFrame. This is shown in more detail in Fig. 2 Hyp 230.

Hyp may also have associated with it information that further specifies the statistical properties of Hyp.

One such associated information to Hyp is its strength, called HypStrength. HypStrength indicates how strongly Hyp should influence the final result. Its value can be given as one value to be applied for all samples, or one value associated with each sample or each block of samples. One such HypStrength 232 is shown in Fig. 2.

Each element in Hyp 230 can be seen to select one element in ShiftDiff 216: The position of the element in Hyp selects a column in ShiftDiff, and the value of the element selects a row in ShiftDiff. This element in ShiftDiff should then be adjusted according to the HypStrength. The method of adjusting chosen for this preferred embodiment is to subtract according to HypStrength:

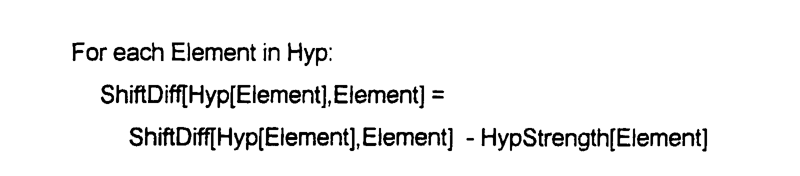

This is called "rewarding" a hypothesis.

Usually, Hyp 230 has been estimated with only limited accuracy, so instead of just rewarding one shift, a whole neighbourhood of shifts around the selected element of ShiftDiff 216 should be rewarded. A simple realization of this invention could used a fixed neighbourhood range. A realization that is computationally more demanding, but produces better results, can be obtained by also exploiting information on how precise Hyp 230 has been estimated in different parts of the frame. For this, a HypRange 234 can be used as a specifier of the statistical properties of Hyp. This specifies the range to the most remote neighbouring shift that should also be rewarded. The reward should be a non-increasing function of the distance. For a function decreasing linearly with distance, this would be the definition of the rewarding mechanism:

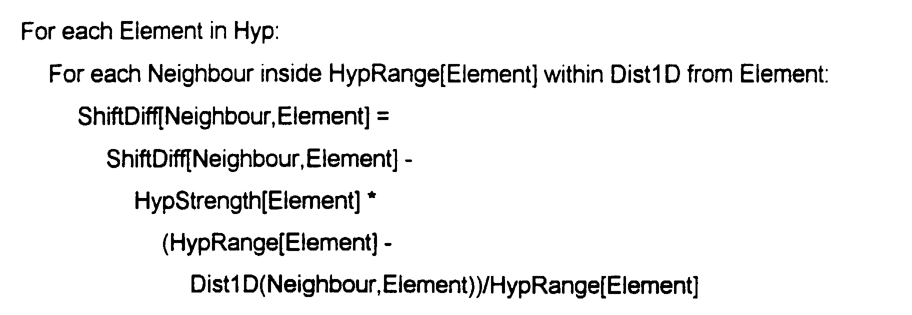

"Dist1D" is a function that returns the difference between two elements. For 1 D frames it can have this definition:

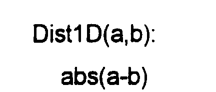

There could have been one HypRange for leftwards motion and one HypRange for rightwise motion. A HypRange 234 is exemplified in Fig. 2.

HypStrength 232 can also have negative values. This corresponds to a motion hypothesis which is unwanted for some reason, possibly because it has been tested before and found to be unfruitful.

In this preferred embodiment, both Hyp 230, HypStrength 232 and HypRange 234 are given such that for each of them, there is a one to one correspondence between their elements and the elements in FromFrame 210. Another possibility would have been to have some or all of them represented in lower resolution than From Frame. In this case, they would have to be converted into the same resolution as From Frame before or at the stage of adding rewards to ShiftDiff. If Hyp, HypStrength or HypRange were represented with only blockwise values, this conversion would consist of duplicating values. Other methods like interpolation could be used.

If there are several sets of side information available, the rewarding procedure can be repeated for each hypothesis.

Fig. 2 shows ShiftDiff 236 after rewarding with Hyp 230 according to HypStrengh 232 and HypRange 234. The selected shifts 238 and the corresponding motion field 240 are also shown. It can be seen that rewarding according to Hyp 230 has indeed affected the estimate of the motion field in that the leftmost part of the motion field now contains zeros, corresponding to no motion.

Because of the well known aperture problem, motion cannot be well estimated by just analyzing each element separately. To overcome this problem, information is propagated between the elements. In the first preferred embodiment, this is achieved by blurring ShiftDiff 236 along the element dimension.

There may be reasons for propagating information differently in different parts of the frames. E.g, in one part of the frame there may be large uniform areas, where information needs to be propagated in from the nearest textured area, while in other parts of the frame, there may be sufficient details to allow good motion estimation based only on a small neighbourhood, and information from other parts of the image would only decrease the quality of the estimate. To account for this, there is a PropRange 250 associated with each element of FromFrame. Each element of PropRange 250 indicates how information should be propagated.

The propagation can be done by convolving ShiftDiff 236 with a filter:

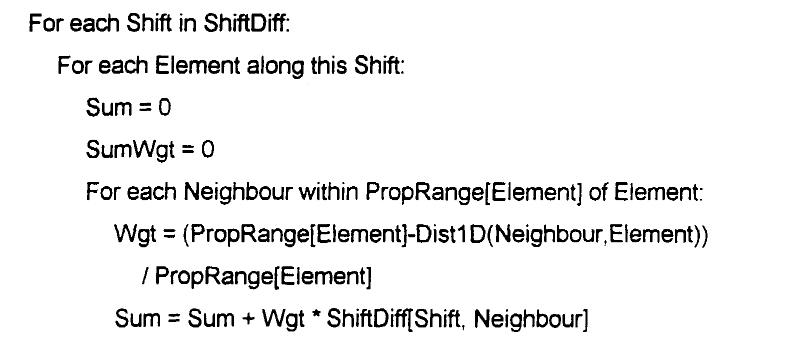

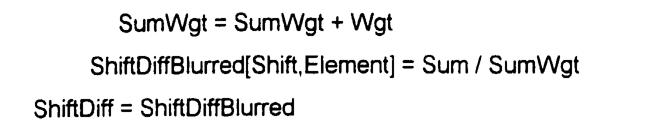

The above PropRange defines how far information should be propagated. Another possible way of controlling propagation is to let each element or each block of elements in FromFrame have with it an associated propagation strength, called PropStrength in short, that defines how strongly the element or block of elements should have its information propagated relative to the other elements or block of elements. The propagation taking PropStrength into consideration can be done as follows:

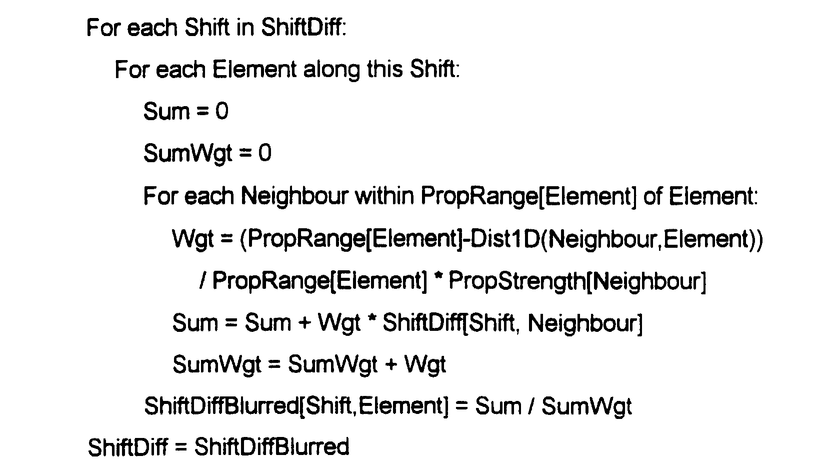

In Fig. 2, a ShiftDiff 252 is shown after propagating information in ShiftDiff 236 from the reward step according to PropRange 250, together with the selected shifts 254 and the corresponding motion field 260, which is the final result.

The above method shows how to propagate information between elements in ShiftDiff after that the measurements of fit have been adjusted according to hypotheses. Another method that can be used instead of or in addition to this is to let each hypothesis have associated with it a propagation range, called HypPropRange in short. This can be one value for the whole FromFrame, or it can be one value for each element or block of elements in FromFrame. HypPropRange can be used for propagating the effect of each hypothesis independently among the elements.

Using offsets, there are two different ways of propagating information through ShiftDiff 252: Either the propagation can be done as above, addressing ShiftDiff directly through its Shift and Element adresses. This promotes a motion field which has the same smoothness characteristics as Off. Or the propagation can be modified to take Off into account. This promotes a motion field whose smoothness is much less affected by Off. A definition of this follows:

For each Shift from min(Off)-SearchRange to max(Off)+SearchRange: 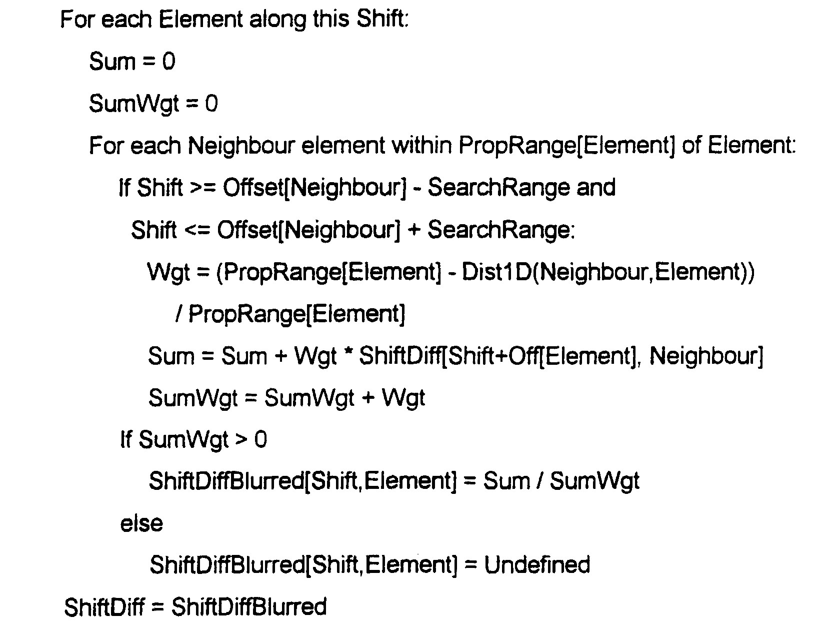 "min" is a function retuming the minimum value among several values; "min(Off)" means the smallest of the Off values defined for the elements. "max" is similar, but retums the maximum value. "Undefined" is a special reserved value that can be recognized and thereby skipped in subsequent steps.

The motion field resulting from the above operations can be analysed to produce a difference field, or Diff for short. Diff is the difference between each element in From Frame and the element in ToFrame corresponding to the selected shift:

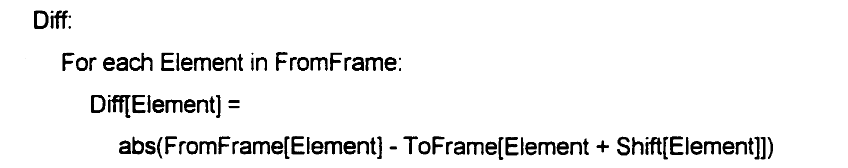

This is called Displaced Frame Difference, or DFD for short, in some prior art.

It is sometimes also of interest to analyze the sensitivity of the found solution: How much can the estimate of the motion be changed without producing a too bad Diff ? For this, a "Slack" is defined.

Slack can be computed in each direction separately; one part, SlackLeft 272, can indicate how much the estimate could be changed in the leftwards direction and another part SlackRight 274 can indicate the same in rightwards direction. Alternatively, a simplified Slack can be computed as the sum, average, minimum or maximum of SlackLeft and SlackRight.

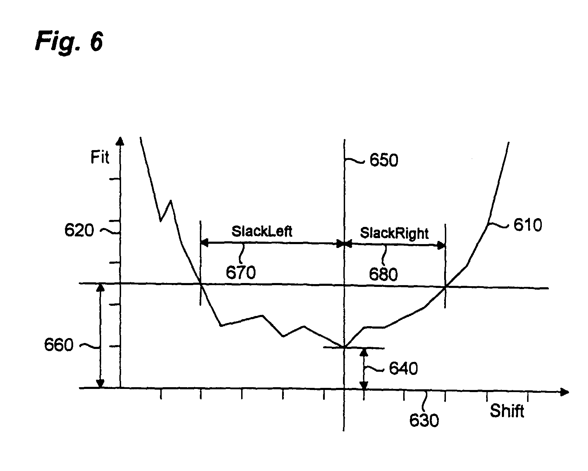

For further explanation, in Fig. 6, the computation of slacks is shown. A curve 610 indicating lack of fit 620 as a function of candidate shifts 630 is shown. Based on the smallest lack of fit 640, a shift has been selected 650. A SlackLevel 660, given as input, is then used for determining SlackLeft 670 for this element as the distance between the selected shift and the first point of the lack of fit curve on the left side of the selected shift where the lack of fit exceeds SlackLevel. SlackRight 680 is found by a similar analysis on the right side of the selected shift.

In Fig. 6, the lack of fit is drawn as a continuous curve, implying that a lack of fit could be defined also at positions not corresponding to discrete shifts. This can be achieved by interpolating between evaluated shifts.

Another possibility is to only consider discrete shifts when calculating slack. This can be done according to the following:

For each Element in From Image:

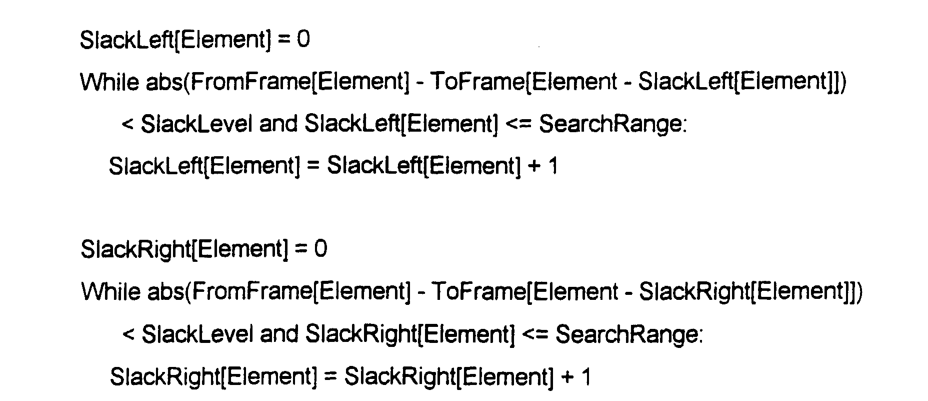

Referring again to Fig. 2, based on a ShiftDiff 252, those elements 270 that are within a SlackLevel chosen to be 2 give rise to SlackLeft 272 and SlackRight 274.

Slack can be generated by analyzing values from ShiftDiff at and around the positions of the selected shift for each element. ShiftDiff at various stages can be used, each with its own advantages:
Diff or Slack can be generated based on the the raw ShiftDiff 216. This has the possible advantage that differences according to the real input frames are computed.
Diff or Slack can be generated based on ShiftDiff after rewarding 236. This has the possible advantage that more information is taken into consideration, and thereby more "correct" results are computed.
Diff or Slack can be generated based on ShiftDiff after propagation 252. This has the possible advantage of better immunity to noise, since single elements are now of less importance for the computation.

### Second preferred embodiment

Now the method described under first preferred embodiment will be described as applied on one type of 2D frames, namely images. The elements of the frames will now be called pixels, according to tradition in image processing.

According to the introduction of a new dimension, some of the entities defined under the first preferred embodiment will now have a different format:

Elements of FromFrame and ToFrame will now be addressed using two coordinates instead of one, the first beeing the vertical and the second beeing the horizontal position inside the respective frames.

Offsets will now for each element be given as one vertical offset and one horizontal offset respectively.

A hypothesis will for each element specify both the vertical and horizontal shift.

A hypothesis range may for each element be specified as four values, one for each of the directions up, down, left and right respectively, or alternately as two simplified values, one for vertical and one for horizontal directions, or even as one value summarizing all directions.

For images, ShiftDiff can be defined as follows:

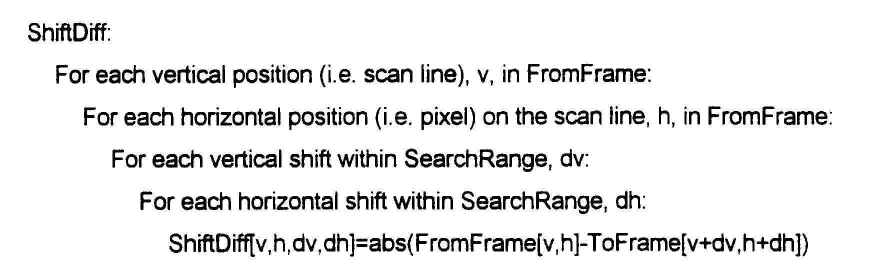

The method is described as applied to frames where each pixel has one component, like gray level television used in former times. It should be noted, however, that these gray level frames may have been preprocessed as mentioned in the first preferred embodiment. Such preprocessing may include conversion from color, e.g, RGB, to a single component, e.g. Y as defined in PAL or NTSC color television standards.

Another preferred embodiment is to let both FromFrame and To Frame have color components, e.g. Red, Green and Blue, or Y,I,Q or Y,U,V as defined in PAL and NTSC respectively. The entries in ShiftDiff can then be computed according to a 3-dimensional distance function, e.g. Euclidian distance, city-block distance, distance according to a uniform color space, or similar. This allows estimating motion in color images also in those regions where the intensity is constant and only the mixture of colors change.

For 2D frames, the equivalent of the "Dist1D" function used for rewarding in the 1D case can be defined as Euclidian distance:

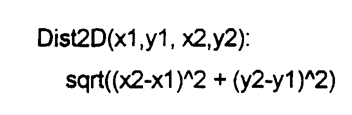

Alternatively, "Dist2D" can be defined as City-block distance:

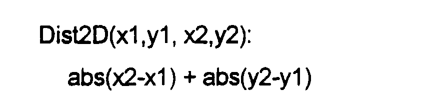

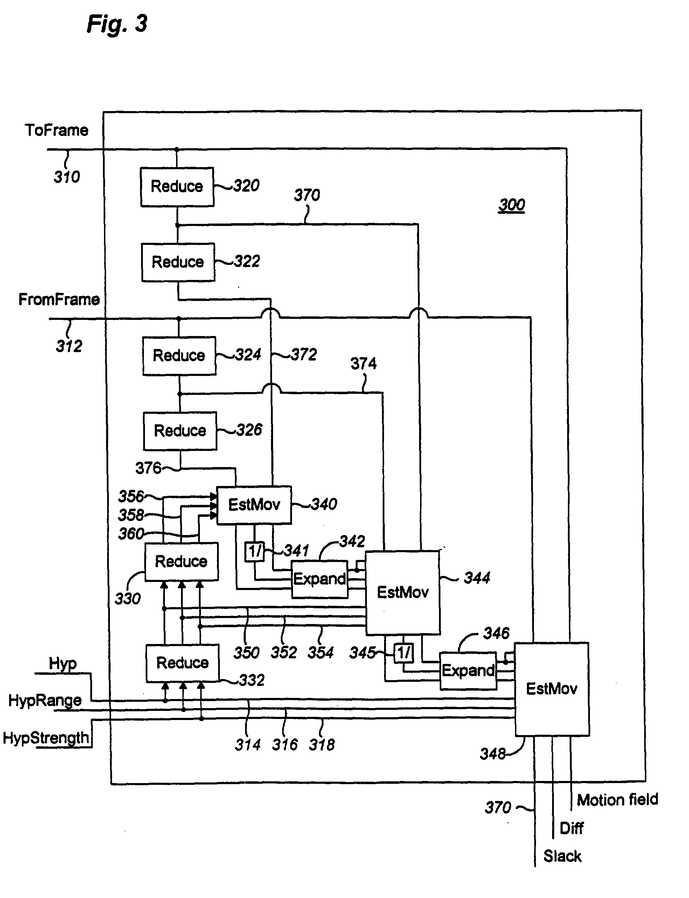

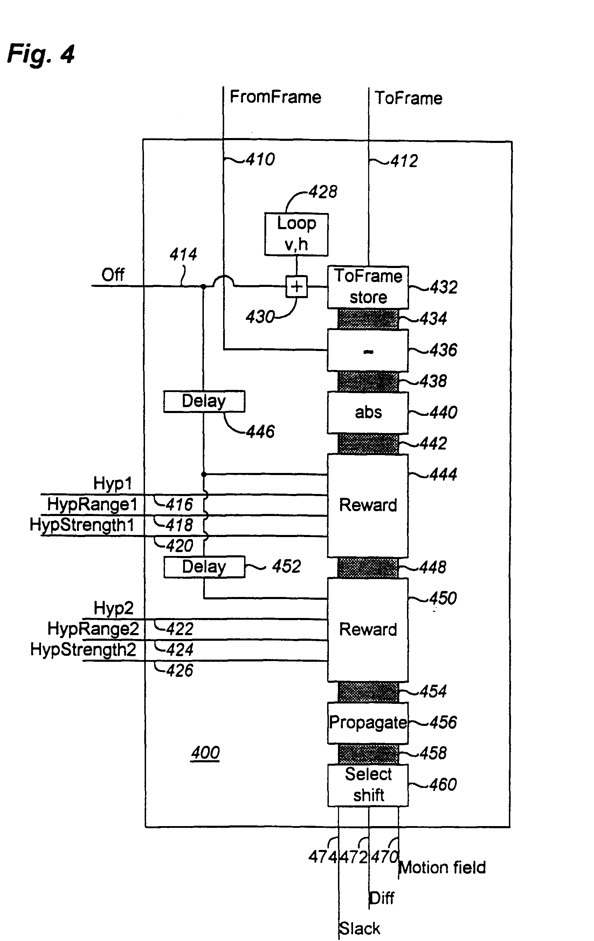

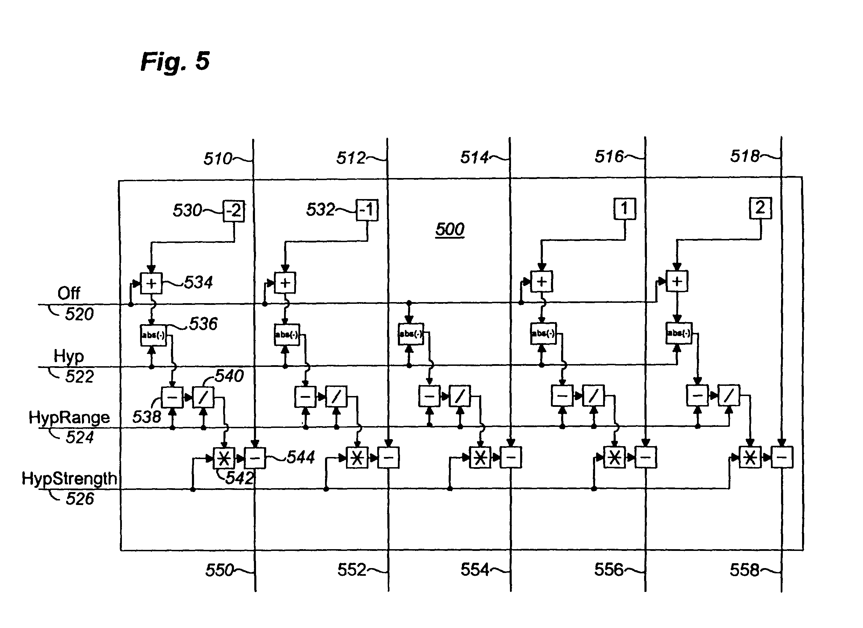

For images, especially when large search ranges are wanted, the amount of data involved becomes large. It may therefore be efficient to establish a pipelined structure. It may also become efficient to use a coarse-to-fine architecture for limiting the amount of different shifts tried. For further details reference is made to the article of W. Enkelmann "Investigations of Multigrid Algorithms for Estimation of Optical Flow Fields in Image Sequences" (Computer Vision, Graphics and Image Processing, 43, 1988) which is incorporated herein by reference. Fig. 3, 4 and 5 together show one embodiment of the combination of these, where Fig. 3 shows the overall organization working over several resolutions, Fig. 4 a module for operating on one resolution in Fig. 3, and Fig. 5 shows details of the reward steps 444, 450 from Fig. 4.

A FromFrame 310 and a ToFrame 312 each pass through a series of reduce steps 320, 322, 324, 326 where in each step the resolution is halved by a factor of two. Likewise a hypothesis Hyp 314 passes through similar steps, where the resolution of both its vertical and horizontal component is in each steps is halved by a factor of two.

The number of reduce steps in Fig. 3 is two for each frame and for the hypothesis, so that the system works on three different resolutions, but another number of steps could have been used.

EstMov 340, which corresponds to EstMov 101 in fig. 1b, estimates motion between the two frames of lowest resolution 376 and 372, also based on side information from the reduced version of Hyp 356 together with reduced versions of HypRange 358 and HypStrength 360. The result is a motion estimate, a slack, and a difference. All three are expanded in resolution by a factor of 2 in the Expand step 342. The resulting motion estimate is used both as an offset Off and a hypothesis Hyp to the next EstMov 344, which works at an intermediate resolution. The slack is used as a hypothesis range. The difference is transformed, e.g. by taking its reciprocal value, before it is fed to EstMov 344 as a hypothesis strength. This EstMov 344 also receives intermediate resolution versions of Hyp 350, HypRange 352 and HypStrength 354. The result is again expanded in resolution by an Expand 346 module, and the result is used both as an offset, hypothesis, hypothesis range and hypothesis strength by the EstMov module 348, together with full resolution versions of Hyp 314, HypRange 316 and HypStrength 318.

One of the shown EstMov modules 340 has one hypothesis as input, while the other two 344, 348 must be able to handle two input hypotheses. An EstMov capable of handling the latter case is shown in Fig. 4, and it can also handle the first case by setting HypStrength to zero for the last hypothesis.

In Fig. 4, the processing is organized around a pipeline, shown by its segments 434, 438, 442, 448, 454, 458.

A ToFrame of some resolution is stored in the ToFrame store 432, at least partially prior to other processing. Then the processing of pixels begins. A v,h looper 428 generates vertical (v) and horizontal (h) base addresses that loops over all pixels in FromFrame.

Synchronous to this, the offset Off 414 is fed to the system, and the sum of base addresses and offsets are added together in 430. The result is used for addressing into ToFrame store 432. A neighbourhood of pixels around the addressed position in ToFrame is then output from ToFrameStore 432 onto the pipeline 434.

Synchrounous to the pixel neighbourhoods on the pipeline 434, pixels of FromFrame 410 arrive. From each of the pixels in the neighbourhood, the Subtracter 436 subtracts the value of the current pixel in FromFrame 410. The Absolute value module 440 then takes the absolute value of each of the neighbourhood differences. It can now be seen that this has produced a representation of ShiftDiff, where the two Shift dimensions corresponds to the neighbourhood on the pipeline and the two frame dimensions corresponds to processing time. For each time step, a new pixel of FromFrame enters the pipeline and each of the further steps of the pipeline performs one set of operations corresponding to one pixel of FromFrame.

This ShiftDiff 442 can now be rewarded according to side information. In Fig. 4, only two such reward stages 444, 450 are shown, but these structures can be repeated according to the number of different side informations available. Off 414, delayed by a delay module 446 to compensate for processing time in intermediate steps 430, 432, 436, 440, is fed to a Reward module 444. A first hypothesis Hyp1 416 with associated range HypRangel 418 and strength HypStrengthl 420 are also fed to the same module. The same process is repeated for a second hypothesis Hyp2 422 in a second Reward 450 module. The result is propagated among pixels by the Propagate module 456. Shifts are selected, and Diff 472 and Slack 474 are computed, by the SelectShift module 460. The selected shifts 470 together make up the motion field.

A more detailed description of the Reward 444, 450 steps from Fig. 4 is given in Fig. 5.

The Reward module 500 is drawn as if it were designed for 1D frames, but its 2D frame equivalent can be found just by replacing all of its one component signals by two component signals, one for each dimension.

A value 514 corresponding to a center row element in ShiftDiff as defined in the first preferred embodiment arrives to the the Reward module 500 together with values corresponding to neighbouring shifts in ShiftDiff 510, 512, 516, 518.

In the Figure, five groups of processing elements can be seen, each corresponding to one shift. One of these groups will now be explained, with the understanding that the other perform similar functions.

The corresponding image coordinate (or coordinates, for the 2-D case) of these values is now found by adding the common offset value Off 520 to a number (or two numbers for the 2-D case) 530 indicating the position of the neighbouring shifts relative to the center value 514.

The distance between the image coordinate and the hypothesis Hyp 522 for each pixel is then found by computing absolute value of the difference between them (or by applying one of the Dist2D functions defined earlier for the 2-D case).

The fraction if HypStrength that should be used for adjusting the measurement of fit is computed by a subtract module 538 and a divide module 540. The subtract module subtracts the distance between the image coordinate and the hypothesis. This subtract is a so called zero clamped operation, in that any resulting value below zero will be set ("clamped") to zero. The divide module devide the result of the subtraction with HypRange 524.

The result is multiplied by HypStrength 526 before beeing subtracted from the input 510, thereby producing an adjusted value 550 corresponding to an element of an updated shift difference matrix.

It can be seen that this cascade of processing elements in total implements the following expression:

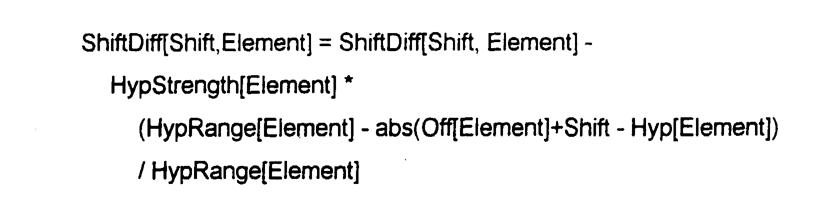

Each of the processing elements in Fig. 5 can operate with low precision and no memory is needed, which gives freedom in choice of implementation. Each processing element could be implemented as a digital arithmetic operation, using a digital look-up table covering only a few selected possible input values, or using analog electronics either constructed by Operational Amplifiers or directly by transistors.

### Third preferred embodiment

In the first preferred embodiment, the invention was shown as applied to 1D frames. There ShiftDiff had one dimension corresponding to the dimension inherent in the frame structure and one dimension according to the dimension for which the motion was to be analyzed, namely the same dimension.

In the second preferred embodiment, it was shown how to apply the invention to 2D frames. ShiftDiff had two dimensions corresponding to the dimensions of the frame structure and two more dimensions according to the dimensions for which the motion was to be analyzed. It was shown how the hypotheses had ranges in the various dimensions, how offsets could be used in certain dimensions, and how information could be propagated in various dimensions.

Likewise, this can be generalized to 3D frames. For an example, consider whole-body X-ray computed tomography scans of a human. In such systems, the scan is often performed in time steps such that one "slice" of the body is scanned, then the scanning mechanisms is advanced one step along some axis, and this is repeated until the whole body has been analysed. The analysis of such a scan for some purposes depend on alignment of the slices. This can be difficult due to breathing or other motions by the subject. By estimating and compensating the motion between slices, the effect of the subject motion can be made less severe.

The motion may be assumed or known to occur in less than all dimensions inherent in the frame structure. E.g, for a human laying on a bench, chest motion caused by breathing will mainly occur in the directions perpendicular to the main axis of the body, which is the same axis as that used for stepping. In this case, ShiftDiff will have two dimensions corresponding to a slice, one dimension corresponding to the number of slices, and two dimensions according to the dimensions where the motion is assumed to happen, that is, within each slice.

Side information about the motion of some parts of the subject could be obtained by ultrasound sensors, analysis of traditional TV camera images synchronized with the scanning, or by other traditional sensors. These would then provide hypotheses that could be used to improve the estimation of motion. The hypothesis would be highly valid and thereby have high strengths for parts easily accessible to the side information sensors, e.g. the body surface or localized markers, and less valied for other parts. Information could then be propagated through the wanted dimensions.

Likewise, 3D MRI scans from the brain of a set of persons can be more easily and precisely interpreted when position and shape information has been separated from chemical compositional information. The position and shape normalization can be done by the 3D motion estimation and corresponding compensation.

While the invention has been particularily shown and described with reference to preferred embodiments thereof, it will understood by those skilled in the art that various changes in form and detail may be made therein without departing from the scope of the invention.

## Claims

1. A method for estimating motion between at least two frames, each frame consisting of a plurality of samples of an input signal, the method comprising the steps of:
(1) selecting for each sample in the first frame a plurality of candidate shifts, and
(2) computing for each candidate shift a measurement of fit between said sample in said first frame and the corresponding sample at the shifted position in said second frame,
(3) adjusting for each sample in said first frame the measurement of fit for each candidate shift according to an externally available motion field indicating how probable it is that certain shifts represent the correct motion, and
(4) selecting for each sample in said first frame the candidate shift with the best associated fit, adjusted according to step (3),
wherein the collection of selected candidate shifts represents the motion from said first frame to said second frame.

2. The method according to claim 1 wherein step (2) comprises:
computing for each candidate shift the measurement of fit both between said sample in said first frame and the corresponding sample at the shifted position in said second frame, and
said sample in said first frame and the corresponding sample at a shifted position according to a scaled version of said shift between said first and second frame, said scaling being indicative of information about similarity of said frames.

3. The method according to claim 1 or 2 wherein the measurement of fit is adjusted according to more than one externally available motion field.

4. The method according to one of claims 1 to 3 wherein each sample or block of samples in each motion field has associated with it a measurement of how probable it is that certain shifts represent the correct motion for said sample or block of samples, and the amount each measurement of fit is adjusted is a function of these probabilities.

5. The method according to one of claims 1 to 3 wherein each sample or block of samples in each motion field has associated with it a measurement of how precise the motion field is with regard to which shifts it applies for, and that for each sample not only the measurement of fit for the sample directly indicated by the motion field, but also the measurement of fit for similar shifts are adjusted.

6. A method for estimating motion between at least two frames, each frame consisting of a plurality of samples of an input signal, the method comprising the steps of:
(1) selecting for each sample in the first frame a plurality of candidate shifts, and
(2) computing for each candidate shift a measurement of fit between said sample in said first frame and the corresponding sample at the shifted position in said second frame,
(3) adjusting for each sample in said first frame the measurement of fit for each candidate shift according to measurements of fit for the same shifts for adjacent samples in said first frame, and
(4) selecting for each sample in said first frame the candidate shift with the best associated fit, adjusted according to step (3),
wherein the collection of selected candidate shifts represents the motion from said first frame to said second frame.

7. The method according to claim 6, wherein the process of adjusting measurements of fit for shifts according to measurements for the same shifts for adjacent samples is carried out by convolving the same shifts for adjacent samples with a low pass filter.

8. The method according to one of claims 6 or 7, wherein
for each motion field, a value associated with each sample or block of samples controls how many adjacent samples will have their measurements of fit for shifts adjusted.

9. The method according to one of claims 6 or 7, wherein
a value associated with each sample or block of samples in one of the frames controls how many adjacent samples will have their measurements of fit for shifts adjusted.

10. The method according to one of claims 6 to 9, wherein
a value associated with each sample or block of samples in one of the frames controls how strongly adjacent samples will be influenced.

11. The method according to one of claims 1 to 10, wherein
with each sample or block of samples in said first frame there is an associated value that controls the selection of candidate shifts.

12. The method according to one of claims 1 to 11, wherein
steps (1) to (4) are executed once for each of several resolutions of the frames, starting from the lowest resolution, and wherein, for each resolution other than the lowest, the measurement of fit is adjusted according to the found estimate of motion for the lower resolution.

13. The method according to one of claims 1 to 12, wherein
after the steps (1) to (4), the found shifts are analyzed with regard to uniqueness, and the result of the analysis is used to control the adjustment of measurements of fit for a subsequent application of steps (1) to (4).

14. The method according to one of claims 1 to 13, wherein after the steps (1) to (4), the found measurements of fit are used to control the adjustment of measurements of fit for a subsequent application of steps (1) to (4).

15. An apparatus for estimating motion between at least two frames, each frame consisting of a plurality of samples of an input signal, the apparatus comprising:
means for selecting for each sample in the first frame a plurality of candidate shifts, and
means for computing (128) for each candidate shift a measurement of fit between said sample in said first frame and the corresponding sample at the shifted position in the second frame,
characterized by
means, coupled between said means for computing (128) and said means for selecting (144), for adjusting (132, 136) for each sample in said first frame the measurement of fit for each candidate shift according to an externally available motion field indicating how probable it is that certain shifts represent the correct motion, and
means for selecting (144) for each sample in said first frame the candidate shift with the best associated adjusted fit,
wherein the collection of selected shifts represents the motion from said first frame to said second frame.

16. An apparatus for estimating motion between at least two frames, each frame consisting of a plurality of samples of an input signal, the apparatus comprising:
means for selecting for each sample in the first frame a plurality of candidate shifts in the second frame, and
means for computing (128) for each candidate shift a measurement of fit between said sample in said first frame and the corresponding sample at the shifted position in said second frame,
characterized by
means, coupled between said means for computing (128) and said means for selecting (144), for adjusting (140) the measurement of fit for each candidate shift according to measurements of fit for the same shift for adjacent samples in said first frame, and
means for selecting (144) for each sample in said first frame the candidate shift with the best associated adjusted fit,
wherein the collection of selected shifts represents the motion from said first frame to said second frame.

17. The apparatus according to claim 15 or 16, wherein, coupled between said means for computing (128) and said means for selecting (144), the apparatus further comprises:
means for adjusting (132, 136) for each candidate shift for each sample in said first frame the measurement of fit according to an externally available motion field indicating how probable it is that certain shifts represent the correct motion and
means for adjusting (140) the measurement of fit for each candidate shift according to measurements of fit for the same shift for adjacent samples in said first frame are provided for.

18. The apparatus according to claims 15 to 17, adapted to be used according to the method of anyone of claims 1 to 14.

## Patentansprüche

1. Verfahren zum Schätzen der Bewegung zwischen wenigstens zwei Frames, wobei jedes Frame aus mehreren Abtastwerten eines Eingangssignals besteht, wobei das Verfahren die folgenden Schritte enthält:
(1) Wählen mehrerer Verschiebungskandidaten für jeden Abtastwert im ersten Frame und
(2) Berechnen eines Übereinstimmungsmaßes zwischen dem Abtastwert im ersten Frame und dem entsprechenden Abtastwert an der verschobenen Position im zweiten Frame für jeden Verschiebungskandidaten,
(3) Einstellen des Übereinstimmungsmaßes für jeden Verschiebungskandidaten entsprechend einem von außen verfügbaren Bewegungsfeld, das angibt, wie wahrscheinlich es ist, daß bestimmte Verschiebungen die korrekte Bewegung repräsentieren, für jeden Abtastwert im ersten Frame und
(4) Wählen des Verschiebungskandidaten mit der besten zugeordneten Übereinstimmung, die gemäß dem Schritt (3) eingestellt worden ist, für jeden Abtastwert im ersten Frame,
wobei die Sammlung der gewählten Verschiebungskandidaten die Bewegung vom ersten Frame zum zweiten Frame repräsentiert.

2. Verfahren nach Anspruch 1, bei dem der Schritt (2) enthält:
für jeden Verschiebungskandidaten Berechnen des Übereinstimmungsmaßes sowohl zwischen
dem Abtastwert im ersten Frame und dem entsprechenden Abtastwert an der verschobenen Position im zweiten Frame als auch zwischen
dem Abtastwert im ersten Frame und dem entsprechenden Abtastwert an einer gemäß einer skalierten Version der Verschiebung zwischen dem ersten und dem zweiten Frame verschobenen Position, wobei die Skalierung Informationen bezüglich der Ähnlichkeit der Frames angibt.

3. Verfahren nach Anspruch 1 oder 2, bei dem das Übereinstimmungsmaß entsprechend mehr als einem von außen verfügbaren Bewegungsfeld eingestellt wird.

4. Verfahren nach einem der Ansprüche 1 bis 3, bei dem jedem Abtastwert oder jedem Block aus Abtastwerten in jedem Bewegungsfeld ein Maß dafür zugeordnet ist, wie wahrscheinlich es ist, daß bestimmte Verschiebungen die korrekte Bewegung für den Abtastwert oder den Block aus Abtastwerten repräsentieren, wobei der Betrag jedes Übereinstimmungsmaßes in Abhängigkeit von diesen Wahrscheinlichkeiten eingestellt wird.

5. Verfahren nach einem der Ansprüche 1 bis 3, bei dem jedem Abtastwert oder jedem Block aus Abtastwerten in jedem Bewegungsfeld ein Maß dafür zugeordnet ist, wie genau das Bewegungsfeld ist in bezug auf Verschiebungen, auf die es angewendet wird, und bei dem für jeden Abtastwert nicht nur das Übereinstimmungsmaß für den Abtastwert, das direkt durch das Bewegungsfeld angegeben wird, sondern auch das Übereinstimmungsmaß für ähnliche Verschiebungen eingestellt werden.

6. Verfahren zum Schätzen der Bewegung zwischen wenigstens zwei Frames, wobei jedes Frame aus mehreren Abtastwerten eines Eingangssignals besteht, wobei das Verfahren die folgenden Schritte enthält:
(1) Wählen mehrerer Verschiebungskandidaten für jeden Abtastwert im ersten Frame und
(2) Berechnen eines Übereinstimmungsmaßes zwischen dem Abtastwert im ersten Frame und dem entsprechenden Abtastwert an der verschobenen Position im zweiten Frame für jeden Verschiebungskandidaten,
(3) Einstellen des Übereinstimmungsmaßes für jeden Verschiebungskandidaten entsprechend Übereinstimmungsmaßen für die gleichen Verschiebungen für angrenzende Abtastwerte im ersten Frame für jeden Abtastwert im ersten Frame und
(4) Wählen des Verschiebungskandidaten mit der besten zugeordneten Übereinstimmung, die im Schritt (3) eingestellt worden ist, für jeden Abtastwert im ersten Frame,
wobei die Sammlung der ausgewählten Verschiebungskandidaten die Bewegung vom ersten Frame zum zweiten Frame repräsentiert.

7. Verfahren nach Anspruch 6, bei dem der Prozeß des Einstellens der Übereinstimmungsmaße für Verschiebungen entsprechend Maßen für die gleichen Verschiebungen für angrenzende Abtastwerte durch Falten derselben Verschiebungen für angrenzende Abtastwerte mit einem Tiefpaßfilter ausgeführt wird.

8. Verfahren nach einem der Ansprüche 6 oder 7, bei dem
für jedes Bewegungsfeld ein jedem Abtastwert oder jedem Block aus Abtastwerten zugeordneter Wert steuert, für wieviele angrenzende Abtastwerte deren Übereinstimmungsmaße für Verschiebungen eingestellt werden.

9. Verfahren nach einem der Ansprüche 6 oder 7, bei dem
ein jedem Abtastwert oder jedem Block aus Abtastwerten in einem der Frames zugeordneter Wert steuert, für wieviele angrenzende Abtastwerte deren Übereinstimmungsmaße für Verschiebungen eingestellt werden.

10. Verfahren nach einem der Ansprüche 6 bis 9, bei dem
ein jedem Abtastwert oder jedem Block aus Abtastwerten in einem der Frames zugeordneter Wert steuert, wie stark angrenzende Abtastwerte beeinflußt werden.

11. Verfahren nach einem der Ansprüche 1 bis 10, bei dem
jedem Abtastwert oder jedem Block aus Abtastwerten im ersten Frame ein Wert zugeordnet ist, der die Auswahl der Verschiebungskandidaten steuert.

12. Verfahren nach einem der Ansprüche 1 bis 11, bei dem
die Schritte (1) bis (4) einmal für jede von mehreren Auflösungen der Frames beginnend bei der niedrigsten Auflösung ausgeführt werden und bei dem für jede von der niedrigsten verschiedene Auflösung das Übereinstimmungsmaß entsprechend der für die niedrigere Auflösung ermittelten Bewegungsschätzung eingestellt wird.

13. Verfahren nach einem der Ansprüche 1 bis 12, bei dem
nach den Schritten (1) bis (4) die ermittelten Verschiebungen in bezug auf Eindeutigkeit analysiert werden, wobei das Ergebnis der Analyse verwendet wird, um die Einstellung der Übereinstimmungsmaße für eine nachfolgende Anwendung der Schritte (1) bis (4) zu steuern.

14. Verfahren nach einem der Ansprüche 1 bis 13, bei dem
nach den Schritten (1) bis (4) die ermittelten Übereinstimmungsmaße verwendet werden, um die Einstellung der Übereinstimmungsmaße für eine nachfolgende Anwendung der Schritte (1) bis (4) zu steuern.

15. Vorrichtung zum Schätzen einer Bewegung zwischen wenigstens zwei Frames, wobei jedes Frame aus mehreren Abtastwerten eines Eingangssignals besteht, wobei die Vorrichtung enthält:
eine Einrichtung zum Wählen mehrerer Verschiebungskandidaten für jeden Abtastwert im ersten Frame und
eine Einrichtung zum Berechnen (128) eines Übereinstimmungsmaßes zwischen dem Abtastwert im ersten Frame und dem entsprechenden Abtastwert an der verschobenen Position im zweiten Frame für jeden Verschiebungskandidaten,
gekennzeichnet durch
eine Einrichtung, die zwischen die Einrichtung zum Berechnen (128) und die Einrichtung zum Wählen (144) geschaltet ist, um für jeden Abtastwert im ersten Frame das Übereinstimmungsmaß für jeden Verschiebungskandidaten entsprechend einem von außen verfügbaren Bewegungsfeld, das angibt, wie wahrscheinlich es ist, daß bestimmte Verschiebungen die korrekte Bewegung repräsentieren, einzustellen (132, 136), und
eine Einrichtung zum Wählen (144) des Verschiebungskandidaten mit der besten zugeordneten eingestellten Übereinstimmung für jeden Abtastwert im ersten Frame,
wobei die Sammlung der ausgewählten Verschiebungen die Bewegung vom ersten Frame zum zweiten Frame repräsentiert.

16. Vorrichtung zum Schätzen der Bewegung zwischen wenigstens zwei Frames, wobei jedes Frame aus mehreren Abtastwerten eines Eingangssignals besteht, wobei die Vorrichtung enthält:
eine Einrichtung zum Wählen mehrerer Verschiebungskandidaten im zweiten Frame für jeden Abtastwert im ersten Frame und
eine Einrichtung zum Berechnen (128) eines Übereinstimmungsmaßes zwischen dem Abtastwert im ersten Frame und dem entsprechenden Abtastwert an der verschobenen Position im zweiten Frame für jeden Verschiebungskandidaten,
gekennzeichnet durch
eine Einrichtung, die zwischen die Einrichtung zum Berechnen (128) und die Einrichtung zum Auswählen (144) geschaltet ist, um das Übereinstimmungsmaß für jeden Verschiebungskandidaten entsprechend Übereinstimmungsmaßen für dieselbe Verschiebung für angrenzende Abtastwerte im ersten Frame einzustellen, und
eine Einrichtung zum Auswählen (144) des Verschiebungskandidaten mit der besten zugeordneten eingestellten Übereinstimmung für jeden Abtastwert im ersten Frame,
wobei die Sammlung der ausgewählten Verschiebungen die Bewegung vom ersten Frame zum zweiten Frame repräsentiert.

17. Vorrichtung nach Anspruch 15 oder 16, wobei die Vorrichtung, die zwischen die Einrichtung zum Berechnen (128) und die Einrichtung zum Auswählen (144) geschaltet ist, ferner enthält:
eine Einrichtung zum Einstellen (132, 136) des Übereinstimmungsmaßes entsprechend einem von außen verfügbaren Bewegungsfeld, das angibt, wie wahrscheinlich es ist, daß bestimmte Verschiebungen die korrekte Bewegung repräsentieren, für jeden Verschiebungskandidaten für jeden Abtastwert und
eine Einrichtung zum Einstellen (140) des Übereinstimmungsmaßes für jeden Verschiebungskandidaten entsprechend Übereinstimmungsmaßen für dieselbe Verschiebung für angrenzende Abtastwerte im ersten Frame.

18. Vorrichtung nach den Ansprüchen 15 bis 17, die so beschaffen ist, daß sie entsprechend dem Verfahren nach irgendeinem der Ansprüche 1 bis 14 verwendet wird.

## Revendications

1. Procédé pour estimer un mouvement entre au moins deux dispositions, chaque disposition étant constituée d'une pluralité d'échantillons d'un signal d'entrée, le procédé comportant les étapes consistant à :
(1) sélectionner, pour chaque échantillon de la première disposition, une pluralité de décalages candidats,
(2) calculer, pour chaque décalage candidat, une mesure d'adaptation entre ledit échantillon de ladite première disposition et l'échantillon correspondant au niveau de la position décalée de ladite seconde disposition,
(3) ajuster, pour chaque échantillon de ladite première disposition, la mesure d'adaptation pour chaque décalage candidat selon un champ de mouvement disponible de manière externe indiquant la probabilité pour que certains décalages représentent le mouvement correct, et
(4) sélectionner, pour chaque échantillon de ladite première disposition, le décalage candidat ayant la meilleure adaptation associée, ajustée selon l'étape (3),
dans lequel le rassemblement des décalages candidats sélectionnés représente le mouvement entre ladite première disposition et ladite seconde disposition.

2. Procédé selon la revendication 1, dans lequel l'étape (2) comporte l'étape consistant à :
calculer, pour chaque décalage candidat, la mesure d'adaptation à la fois entre
ledit échantillon de ladite première disposition et l'échantillon correspondant au niveau de la position décalée de ladite seconde disposition, et
ledit échantillon de ladite première disposition et l'échantillon correspondant au niveau d'une position décalée selon une version mise à l'échelle dudit décalage entre lesdites première et seconde dispositions, ladite mise à l'échelle étant représentative d'informations concernant une similarité entre lesdites dispositions.

3. Procédé selon la revendication 1 ou 2, dans lequel la mesure d'adaptation est ajustée selon plusieurs champs de mouvement disponibles de manière externe.

4. Procédé selon l'une quelconque des revendications 1 à 3, dans lequel chaque échantillon ou bloc d'échantillons de chaque champ de mouvement a, associée à celui-ci, une mesure de la probabilité que certains décalages représentent le mouvement correct pour ledit échantillon ou bloc d'échantillons, et la quantité par laquelle est ajustée chaque mesure d'adaptation est une fonction de ces probabilités.

5. Procédé selon l'une quelconque des revendications 1 à 3, dans lequel chaque échantillon ou bloc d'échantillons de chaque champ de mouvement a, associée à celui-ci, une mesure de la précision du champ de mouvement par rapport aux décalages pour lesquels il est appliqué, et on ajuste pour chaque échantillon non seulement la mesure d'adaptation de l'échantillon directement indiqué par le champ de mouvement, mais également la mesure d'adaptation de décalages similaires.

6. Procédé pour estimer un mouvement entre au moins deux dispositions, chaque disposition étant constituée d'une pluralité d'échantillons d'un signal d'entrée, le procédé comportant les étapes consistant à :
(1) sélectionner, pour chaque échantillon de la première disposition, une pluralité de décalages candidats, et
(2) calculer, pour chaque décalage candidat, une mesure d'adaptation entre ledit échantillon de ladite première disposition et l'échantillon correspondant au niveau de la position décalée de ladite seconde disposition,
(3) ajuster, pour chaque échantillon de ladite première disposition, la mesure d'adaptation pour chaque décalage candidat conformément à des mesures d'adaptation des mêmes décalages pour des échantillons adjacents de ladite première disposition, et
(4) sélectionner, pour chaque échantillon de ladite première disposition, le décalage candidat ayant l'adaptation la mieux associée, ajustée selon l'étape (3),
dans lequel le rassemblement des décalages candidats sélectionnés représente le mouvement entre ladite première disposition et ladite seconde disposition.

7. Procédé selon la revendication 6, dans lequel le processus d'ajustement des mesures d'adaptation pour des décalages conformément à des mesures pour les mêmes décalages d'échantillons adjacents est effectué par convolution des mêmes décalages pour des échantillons adjacents à l'aide d'un filtre passe-bas.

8. Procédé selon la revendication 6 ou 7, dans lequel
pour chaque champ de mouvement, une valeur associée à chaque échantillon ou bloc d'échantillons commande le nombre d'échantillons adjacents qui vont avoir leurs mesures d'adaptation ajustées pour des décalages.

9. Procédé selon la revendication 6 ou 7, dans lequel
une valeur associée à chaque échantillon ou bloc d'échantillons d'une des dispositions commande le nombre d'échantillons adjacents qui vont avoir leurs mesures d'adaptation ajustées pour des décalages.

10. Procédé selon l'une quelconque des revendications 6 à 9, dans lequel
une valeur associée à chaque échantillon ou bloc d'échantillons d'une des dispositions commande la force par laquelle des échantillons adjacents vont être influencés.

11. Procédé selon l'une quelconque des revendications 1 à 10, dans lequel
avec chaque échantillon ou bloc d'échantillons de ladite première disposition, il existe une valeur associée qui commande la sélection de décalages candidats.

12. Procédé selon l'une quelconque des revendications 1 à 11, dans lequel
les étapes (1) à (4) sont exécutées une fois pour chacune des plusieurs résolutions des dispositions, en commençant par la résolution la plus basse, et dans lequel, pour chaque résolution autre que la plus basse, la mesure d'adaptation est ajustée conformément à l'estimation de mouvement trouvée pour la résolution inférieure.

13. Procédé selon l'une quelconque des revendications 1 à 12, dans lequel
après les étapes (1) à (4), les décalages trouvés sont analysés en ce qui concerne le caractère unique, et le résultat de l'analyse est utilisé pour commander l'ajustement de mesures d'adaptation pour une application ultérieure des étapes (1) à (4).

14. Procédé selon l'une quelconque des revendications 1 à 13, dans lequel
après les étapes (1) à (4), les mesures d'adaptation trouvées sont utilisées pour commander l'ajustement de mesures d'adaptation pour une application ultérieure des étapes (1) à (4).

15. Dispositif pour estimer un mouvement entre au moins deux dispositions, chaque disposition étant constituée d'une pluralité d'échantillons d'un signal d'entrée, le dispositif comportant :
des moyens pour sélectionner, pour chaque échantillon de la première disposition, une pluralité de décalages candidats, et
des moyens pour calculer (128), pour chaque décalage candidat, une mesure d'adaptation entre ledit échantillon de ladite première disposition et l'échantillon correspondant au niveau de la position décalée de la seconde disposition,
caractérisé par
des moyens, montés entre lesdits moyens de calcul (128) et lesdits moyens de sélection (144), pour ajuster (132, 136), pour chaque échantillon de ladite première disposition, la mesure d'adaptation de chaque décalage candidat conformément à champ de mouvement disponible de manière externe indiquant la probabilité pour que certains décalages représentent le mouvement correct, et
des moyens pour sélectionner (144), pour chaque échantillon de ladite première disposition, le décalage candidat ayant la meilleure adaptation ajustée associée,
dans lequel le rassemblement des décalages candidats sélectionnés représente le mouvement entre la première disposition et ladite seconde disposition.

16. Dispositif pour estimer un mouvement entre au moins deux dispositions, chaque disposition étant constituée d'une pluralité d'échantillons d'un signal d'entrée, le dispositif comportant :
des moyens pour sélectionner, pour chaque échantillon de ladite première disposition, une pluralité de décalages candidats de la seconde disposition, et
des moyens pour calculer (128), pour chaque décalage candidat, une mesure d'adaptation entre ledit échantillon de ladite première disposition et l'échantillon correspondant au niveau de la position décalée de ladite seconde disposition,
caractérisé par
des moyens, montés entre lesdits moyens de calcul (128) et lesdits moyens de sélection (144), pour ajuster (140) la mesure d'adaptation de chaque décalage candidat conformément à des mesures d'adaptation pour le même décalage d'échantillons adjacents de ladite première disposition, et
des moyens pour sélectionner (144), pour chaque échantillon de ladite première disposition, le décalage candidat ayant la meilleure adaptation ajustée associée,
dans lequel le rassemblement des décalages sélectionnés représente le mouvement entre ladite première disposition et ladite seconde disposition.

17. Dispositif selon la revendication 15 ou 16, dans lequel le dispositif comporte de plus : montés entre lesdites moyens de calcul (128) et lesdits moyens de sélection (144)
des moyens pour ajuster (132, 136), pour chaque décalage candidat de chaque échantillon de ladite première disposition, la mesure d'adaptation selon un champ de mouvement disponible de manière externe indiquant la probabilité pour que certains décalages représentent le mouvement correct, et
des moyens pour ajuster (140) la mesure d'adaptation de chaque décalage candidat selon des mesures d'adaptation fournies pour le même décalage pour des échantillons adjacents de ladite première disposition.

18. Dispositif selon l'une quelconque des revendications 15 à 17, adapté pour être utilisé selon le procédé selon l'une quelconque des revendications 1 à 14.
